# EUROPEAN PATENT APPLICATION

(11) **EP 4 470 430 A1**
(43) Date of publication of application: **04.12.2024**
(21) Application number: 24178545.0
(22) Date of filing: 28.05.2024
(51) Int. Cl.: A47J 31/60

(54) **COFFEE MACHINE**

(30) Priority: 01.06.2023 TR 202306386
(71) Applicant: BSH Hausgeräte GmbH, 81739 München (DE)
(72) Inventor: Özkayran, Seyhun, Istanbul (TR); Ertan, Muhittin Deniz, Istanbul (TR)

(57) **Abstract**

A coffee machine (10), in particular fully automatic coffee machine for brewing hot beverages from pressed coffee powder, which after brewing process is released into a marc container (11), where the marc container (11) is placed in a drip tray (12) which is configured to receive processed water, wherein the drip tray (12) is provided with water evaporation system.

The present invention provides a coffee machine comprising a water evaporation system which reduces the water amount inside the drip tray and inside the marc container. Reducing amount of water eliminates the risk of growing microorganisms inside the coffee machine. Decreasing the amount of moisture causes the reduction of the cleaning activities frequency and also makes the cleaning of the coffee machine easy and convenient for the user.

## Description

The present invention relates to a coffee machine, in particular fully automatic coffee machine for brewing hot beverages from pressed coffee powder, which after brewing process is released into a marc container, where the marc container is placed in a drip tray which is configured to receive processed water after the brewing process.

Evaporation methods of the residuals in coffee machines are known from the state of the art. Reducing of amount of water inside a coffee machine influences positively not only the appliance but also the usage of the device.

A piezoelectric effect is a known phenomenon which is widely used not only in a household devices like speakers, lighters, ultrasonic air humidifying devices, printers but also in distant industries like automotive, medical equipment or telecommunication. The piezoelectric effect uses a specific type of material (e.g. quartz, topaz, zinc oxide) which is a piezoelectric material. Piezoelectric material is a material which produces an electric voltage, often surprisingly high when mechanically deformed, compressed or crashed. Piezoelectric materials do not conduct electricity. Elements from piezoelectric materials have a bidirectional, reversible action. When an electric current is given, piezoelectric materials are vibrating and this effect is used in different kind of devices. A myriad of different piezoelectric materials are known, of which only a few have found practical application.

The document DE 295 18 737 U1 discloses an espresso sieve cleaning device comprising a vibration generator which can be set into vibration in the sonic or ultrasonic range, and a vibration transmission device which can transmit the vibrations of the vibration generator to an espresso sieve holder, in which the espresso sieve can be held, so that coffee grounds in the espresso sieve can be removed from it by vibrating the espresso sieve by actuating the vibration generator.

The patent document DE 10 2007 024 441 A1 discloses a coffee machine with a marc container, in which the pressed coffee powder is ejected after leaching in a brewing unit. A device is provided for drying the marc placed in the marc container. The device is formed as blower device and heating device for drying. The heating device is a heat radiator. The heating device is a heating element imprinted on the inner surface of the marc container.

The object of the present invention is to provide a coffee machine with w drip tray in which the presence of processed water collected after the brewing process is eliminated in order to make the cleaning process of the drip tray as infrequent as possible and easy thus comfortable for the user.

This object is solved by a coffee machine in which the drip tray is provided with water evaporation system. The water evaporation system can be placed upstream or inside the drip tray or inside the marc container. The water evaporation system is provided to enhance evaporation of water and moisture collected inside the drip tray and inside the marc container. After the brewing process marc contain a lot of moisture therefore stick to the marc container walls. For this reason emptying of the marc container is hindered for the user. Thanks to the water evaporation system the pomace is dehydrated and emptying of the marc container is easier for the user. The water evaporation system also enhances processed water evaporation which is received by the drip tray during brewing process. Water evaporates so the drip tray does not contain water thus the risk of spilling water by the user during emptying drip tray is eliminated. The frequency of the maintaining activities of such drip tray and marc container has been also decreased.

In a preferred embodiment of the invention the evaporation system is a piezo system comprising a piezo sensor. In the context of this invention preferably any electrically activateable piezo actuator as well as so called ultrsonic humidifiers or so called mist makers shall be seen as such piezo sensor. The piezo sensor is configured in the drip tray or in the marc container. The piezo system converts a high frequency, electronic signal into high frequency mechanical oscillations that are able to break the adhesive forces of water. Thus, water can be transformed into excessively small particles which are able to hang in the air. Therefore, the efficiency of water evaporation is increased the processed water collected inside the drip tray evaporates and coffee residuals are dried quickly. The positive effect of introducing the piezo sensor is that the cleaning of the drip tray and the marc container is easy and comfortable for the user. Another positive effect of decreasing the amount of water collected inside the drip tray and moisture in marc is that in such dehydrated environment where the humidity is on low level the growth of bacterial and fungal growth is eliminated. Thus, the user is protected against negative influence of microorganisms.

In the preferred embodiment of the invention the piezo sensor is built in the drip tray or in the marc container walls e.g. by overmoulding. The positive effect is that the piezo sensor is firmly connected to the coffee machine parts.

In another embodiment of the invention the evaporation system comprises a blower e.g. a fan. The fan can run for the entire duration of the coffee machine's operation or only for a certain time after a hot beverage has been dispensed. The fan enhances the drying and evaporation process. The positive effect is that blower is a simple and cheap to implement solution.

In a preferred embodiment of the invention the evaporation system comprises a heater e.g. a flat heating element. The flat heating element can be made as a thick-film heater with a printed or spraying-on heating element. The heating element is printed or sprayed onto the inner surface of the marc container or onto the inner surface of the drip tray. The positive effect is that the risk of injury by the heater of the user has been eliminated.

The present invention provides a coffee machine comprising a water evaporation system which reduces the water amount inside the drip tray and inside the marc container. Reducing amount of water eliminates the risk of growing microorganisms inside the coffee machine. Decreasing the amount of moisture causes the reduction of the cleaning activities frequency and also makes the cleaning of the coffee machine easy and convenient for the user.

The construction of the invention, however, together with additional objects and corresponding advantages will be best understood from the following description of specific embodiments and in connection with the accompanying drawing.

In the drawing:
- Fig. 1: shows a coffee machine in isometric view
- Fig. 2: shows a drip tray with a marc container in isometric view.

In cooperation with attached drawing, the technical contents and detailed description of the present invention are described thereinafter according to a preferable embodiment being not used to limit its executing scope. Any equivalent variation and modification made according to appended claims is all covered by the claims claimed by the present invention.

In the following description of the preferred embodiments of the present invention, similar identical reference numbers designate identical of comparable components.

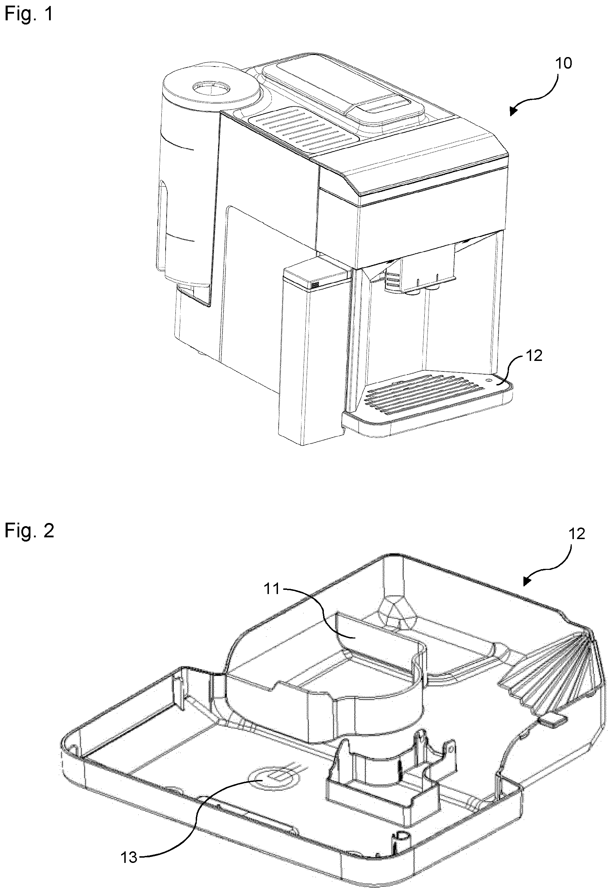

Fig. 1 shows a coffee machine 10 comprising a coffee machine body, a water container, a coffee receptacle, a coffee outlet and a drip tray 12 which is removably connected to the coffee machine 10. The drip tray 12 works as a drawer which can be taken out of the coffee machine 10, emptied, cleaned and inserted back. The drip tray 12 collects processed water and marc which are released after brewing process.

Fig. 2 shows a drip tray 12 and a marc container 11. The marc container 11 is a separate element which is placed inside the drip tray 12. The marc container 11 is a simple receptacle in which marc are collected and which can be taken out from the drip tray 12 in order to empty it. The drip tray 12 is provided with a piezo sensor 13. The piezo sensor 13 is placed at the bottom of the drip tray 12. The piezo sensor 13 generates oscillations which are able to break the adhesive forces of water collected inside the drip tray 12. Water from the drip tray 12 and water contained in marc collected inside the marc container 11 evaporates so the drip tray 12 is water free and the marc are dehydrated.

The present invention provides a coffee machine comprising a water evaporation system which reduces the water amount inside the drip tray and inside the marc container. Reducing amount of water eliminates the risk of growing microorganisms inside the coffee machine. Decreasing the amount of moisture causes the reduction of the cleaning activities frequency and also makes the cleaning of the coffee machine easy and convenient for the user.

### REFERENCE SIGNS

- 10: coffee machine
- 11: marc container
- 12: drip tray
- 13: piezo sensor

## Claims

1. A coffee machine (10), in particular fully automatic coffee machine for brewing hot beverages from pressed coffee powder, which after brewing process is released into a marc container (11), where the marc container (11) is placed in a drip tray (12) which is configured to receive processed water, **characterized in that** the drip tray (12) is provided with water evaporation system.

2. The coffee machine (10) according to claim 1, **characterized in that** the evaporation system is a piezo system comprising a piezo sensor (13).

3. The coffee machine (10) according to any of the preceding claims, **characterized in that** the piezo sensor (13) is built in the drip tray (12).

4. The coffee machine (10) according to claim 1, **characterized in that** the evaporation system comprises a blower.

5. The coffee machine (10) according to claim 1, **characterized in that** the evaporation system comprises a heater.
